# EUROPEAN PATENT APPLICATION

(11) **EP 4 811 231 A1**
(43) Date of publication of application: **23.09.2026**
(21) Application number: 26157452.9
(22) Date of filing: 10.02.2026
(51) Int. Cl.: G06Q 10/04, G06Q 10/087

(54) **STOCK OPTIMIZATION SYSTEM AND STOCK OPTIMIZATION METHOD**

(30) Priority: 17.03.2025 JP 2025042715
(71) Applicant: Hitachi, Ltd., Tokyo 100-8280 (JP)
(72) Inventor: NGUYEN, Quoc Hung, Tokyo 100-8280 (JP); SUEMITSU, Issei, Tokyo 100-8280 (JP); HUNABAD, Tejdeep Reddy, Tokyo 100-8280 (JP); AKUTSU, Itoe, Tokyo 100-8280 (JP)
(74) Representative: MERH-IP Matias Erny Reichl Hoffmann Patentanwälte PartG mbB

(57) **Abstract**

A stock optimization system includes: a weight determination module configured to calculate a total weight, which is a weight of quantitative priority orders of products, based on at least a user input that is evaluation of the products input by a user, from among the user input and a data-driven reference which is a reference obtained through data processing instead of the user input; an optimization module configured to formulate an objective function based on the total weight; and a user interaction module that receives the user input.

## Description

### BACKGROUND OF THE INVENTION

### Field of the Invention

The present invention relates to a stock optimization system and a stock optimization method.

### Description of the Related Art

Determining an optimal stock quantity is a difficult problem to which various factors are related. Patent Literature 1 discloses a system that receives a stock dataset indicating past values of stock variables over time, applies a prediction module including a machine learning model trained with past stock variable data, generates a prediction dataset including statistical distribution of the stock variables, applies an optimization module to the prediction dataset, determines a future stock target level under specific restriction conditions using an optimization algorithm with probabilistic restrictions, and continuously updates the machine learning model using a value of a current stock variable.

### Citation List

### Patent Literature

Patent Literature 1: U.S. Patent No. 11620612

According to the invention described in Patent Literature 1, it is not possible to reflect user's determination to a stock quantity.

### SUMMARY OF THE INVENTION

A stock optimization system according to a first aspect of the present invention is a stock optimization system that optimizes stock levels of products including: a weight determination module configured to calculate a total weight, which is a weight of quantitative priority orders of the products, based on at least a user input that is evaluation of the products input by a user, from among the user input and a data-driven reference which is a reference obtained through data processing instead of the user input; an optimization module configured to formulate an objective function based on the total weight; and a user interaction module that receives the user input.

A stock optimization method according to a second aspect of the present invention is a stock optimization method that is executed by a computer, the method including: a reception step of receiving, from a user, a user input that is evaluation of products; a weight determination step of calculating a total weight, which is a weight of quantitative priority orders of the products, based on at least the user input, from among the user input and a data-driven reference which is a reference obtained through data processing instead of the user input; a formulation step of formulating an objective function based on the total weight; and a solution step of solving an optimization model that maximizes the objective function while complying with a limitation.

According to the present invention, it is possible to reflect user's determination to determination of a stock quantity.

### BRIEF DESCRIPTION OF THE DRAWINGS

FIG. 1 is a functional configuration diagram of a stock optimization system according to a first embodiment;
FIG. 2 is a hardware configuration diagram of the stock optimization system;
FIG. 3 is a conceptual diagram illustrating an input and an output of the stock optimization system;
FIG. 4 is a flowchart illustrating an overview of processing of the stock optimization system;
FIG. 5 is a flowchart illustrating details of input reception processing;
FIG. 6 is a diagram illustrating a management screen;
FIG. 7 is a diagram illustrating the management screen;
FIG. 8 is a diagram illustrating an evaluation target selection window;
FIG. 9 is a diagram illustrating a reference product selection window;
FIG. 10 is a diagram illustrating a comparative product selection window;
FIG. 11 is a diagram illustrating a relative evaluation value input window;
FIG. 12 is a flowchart illustrating details of weight calculation processing;
FIG. 13 is a diagram illustrating an example of relative evaluation values and pairwise comparison matrixes;
FIG. 14 is a flowchart illustrating details of stock calculation processing;
FIG. 15 is a diagram illustrating a validity date input window according to a modification;
FIG. 16 is a functional configuration diagram of a stock optimization system according to a second embodiment;
FIG. 17 is a diagram illustrating an example of optimal stock values calculated by each optimization model; and
FIG. 18 is a diagram for explaining a winning rate.

### DETAILED DESCRIPTION OF THE INVENTION

### First Embodiment

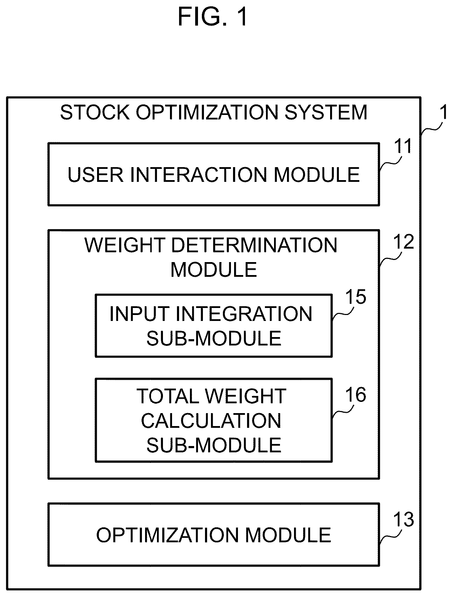

Hereinafter, a first embodiment of a stock optimization system will be described with reference to FIGS. 1 to 14. The stock optimization system determines a stock quantity for each product. In the present embodiment, persons who use the stock optimization system will be referred to as "users". The number of users may be any number and may be one or more.

FIG. 1 is a functional configuration diagram of a stock optimization system 1. The stock optimization system 1 includes a user interaction module 11, a weight determination module 12, and an optimization module 13. The weight determination module 12 includes an input integration sub-module 15 and a total weight calculation sub-module 16. The user interaction module 11 provides information to users and receives inputs from the users.

Hereinafter, processing executed by the user interaction module 11 will also be referred to as a reception step, processing executed by the weight determination module 12 will also be referred to as a weight determination step, and processing executed by the optimization module 13 will also be referred to as an optimization step. Moreover, processing executed by the input integration sub-module 15 will also be referred to as an input integration sub-step, and processing executed by the total weight calculation sub-module 16 will also be referred to as a total weight calculation sub-step.

The input integration sub-module 15 calculates a user evaluation weight indicating an importance level of each product using a user input. Also, the input integration sub-module 15 calculates a weight indicating an importance level of each product for each evaluation item using automatically acquired data. The total weight calculation sub-module 16 calculates a total weight W which is an importance level of each product in consideration of all evaluation items to be used, by using an output of the input integration sub-module 15. Note that the total weight W may be expressed as a vector below, and in that case, the total vector W will be referred to as a "total weight vector W".

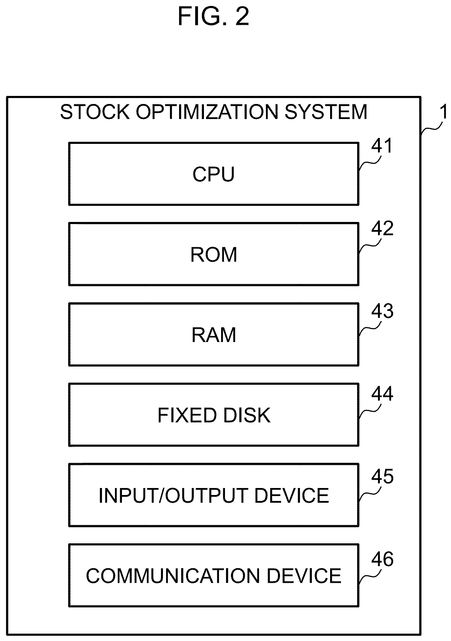

FIG. 2 is a hardware configuration diagram of the stock optimization system 1. The stock optimization system 1 includes a CPU 41 which is a central processing unit, a ROM 42 which is a read-only storage device, a RAM 43 which is a readable/writable storage device, an input/output device 45 which is a user interface, and a communication device 46. The above-described various kinds of computation are performed by the CPU 41 loading a program stored in the ROM 42 onto the RAM 43 and executing it. The Stock optimization system 1 may be implemented by a field programmable gate array (FPGA) which is a rewritable logic circuit or an application specific integrated circuit (ASIC) which is an integrated circuit for a specific application instead of the combination of the CPU 41, the ROM 42, and the RAM 43. Also, the stock optimization system 1 may be implemented by a combination of different configurations, for example, a combination of the CPU 41, the ROM 42, the RAM 43, and an FPGA instead of the combination of the CPU 41, the ROM 42, and the RAM 43.

A fixed disk 44 is a non-volatile storage device, for example, a hard disk drive. The input/output device 45 is, for example, a mouse, a keyboard, or a display. The communication device 46 is a communication module capable of performing at least one of wireless communication and wired communication. Although FIG. 2 illustrates the stock optimization system 1 composed of a single hardware device for convenience, the stock optimization system 1 may be composed of a plurality of hardware devices. In this case, the hardware devices may be installed adjacent to each other or may be connected via a local area network or the Internet. It can also be stated that the stock optimization system 1 is implemented by a general-purpose computer.

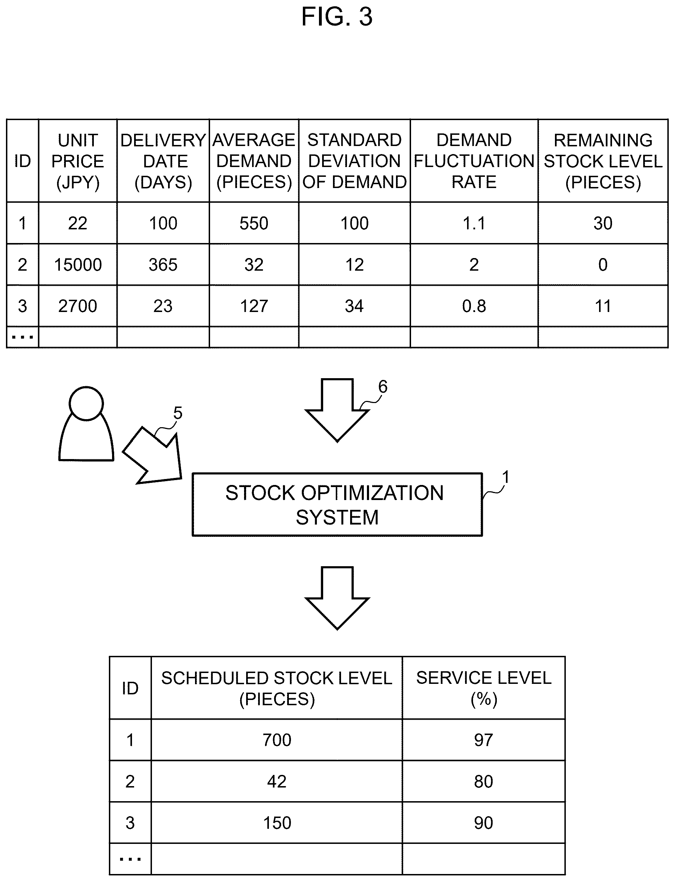

FIG. 3 is a conceptual diagram illustrating inputs and outputs of the stock optimization system 1. Two inputs, namely automatically collected data and a user input are given to the stock optimization system 1. The stock optimization system 1 outputs at least an optimal stock level for each product. Hereinafter, evaluation of a product that the user inputs to the stock optimization system 1 will be referred to as a user input 5, and data automatically acquired by the stock optimization system 1 will be referred to as a data-driven reference 6. The user input 5 is expected to reflect latest information that the user could learn from news or the like and future prediction of the user. The user input 5 can also be called a "user evaluation value". The data-driven reference 6 can also be considered as being objective because no user's subjectivity is included. Data included in the data-driven reference 6 tends to be inferior to the user input 5 in terms of freshness.

At least a price of each product is included in the data-driven reference 6. A delivery date, an average demand, a standard deviation of a demand, a demand fluctuation rate, a remaining stock quantity, and the like may be included in the data-driven reference 6 as illustrated in FIG. 3, or other data may be included. Although an ID identifying each product is used instead of a specific name of the product in FIG. 3, it is sufficient that each product can be identified, and any name or any other identifier may be used.

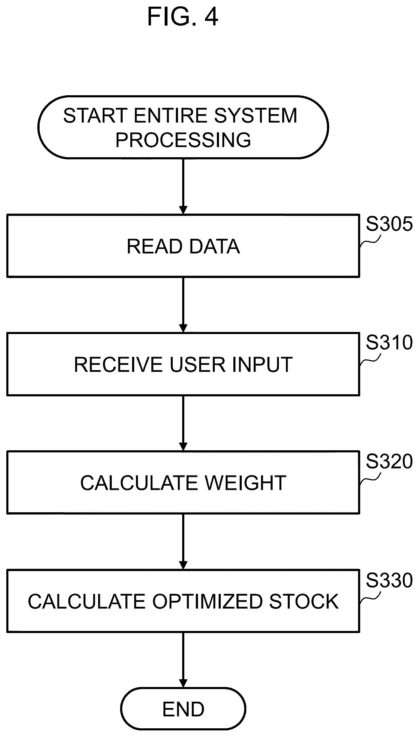

FIG. 4 is a flowchart illustrating an overview of processing of the stock optimization system 1. First, in Step S305, the user interaction module 11 executes data acquisition processing of reading product data. In subsequent Step S310, the user interaction module 11 executes input reception processing of receiving the user input 5, which is an input from the user.

In subsequent Step S320, the weight determination module 12 executes weight calculation processing of calculating the total weight W. The total weight W is generated from the user input 5 and automatically acquired objective data. In final Step S341, the optimization module 13 executes stock calculation processing of calculating the optimized stock using the total weight W. Hereinafter, the input reception processing may be referred to as first processing, the weight calculation processing may be referred to as second processing, and the stock calculation processing may be referred to as third processing. Here, only details of Step S305 will be described, and Step S310 and the following steps will be described with reference to other flowcharts.

In the data acquisition processing, the user interaction module 11 acquires various kinds of data related to each product. At least a price of the product is included in the data, and a delivery date, topicality, and various other evaluation references may be included. The user interaction module 11 may acquire data from a database, which is not illustrated, or may acquire data through searching. For example, the user interaction module 11 can acquire data regarding the price and the delivery date of each product from a database managed by a product seller. Also, the user interaction module 11 may acquire the data regarding the price and the delivery date of each product through the Internet searching. The acquisition of data from a database can be achieved by a preset command sentence, for example, an SQL sentence. The acquisition of data from the Internet searching can be achieved by acquiring an HTML file using a preset search query and analyzing the HTML file.

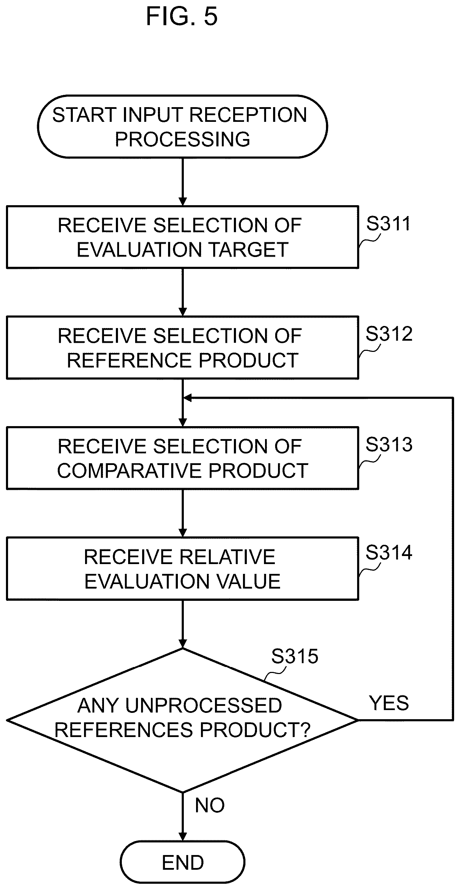

FIG. 5 is a flowchart illustrating details of the input reception processing executed by the user interaction module 11. This processing corresponds to Step S310 in FIG. 4. The flowchart will be explained, and an example of screen display will then be explained. In Step S311, the user interaction module 11 receives user's selection of an evaluation target. The evaluation target includes at least a user definition value and may or may not include other evaluation targets. In other words, the number of references to be selected in this step is one or more.

In Step S312, the user interaction module 11 receives user's selection of a reference product. The user selects one or more reference products. In Step S313, the user interaction module 11 receives user's selection of a comparative product. This step is executed on one of the reference products selected by the user in Step S312. In Step S314, the user interaction module 11 receives a user input of a relative evaluation value. In Step S315, the user interaction module 11 determines whether or not there is any unprocessed reference product. The user interaction module 11 returns to Step S313 in a case where it is determined that there is an unprocessed reference product, or ends the processing illustrated in FIG. 5 in a case where it is determined that there is no unprocessed reference product.

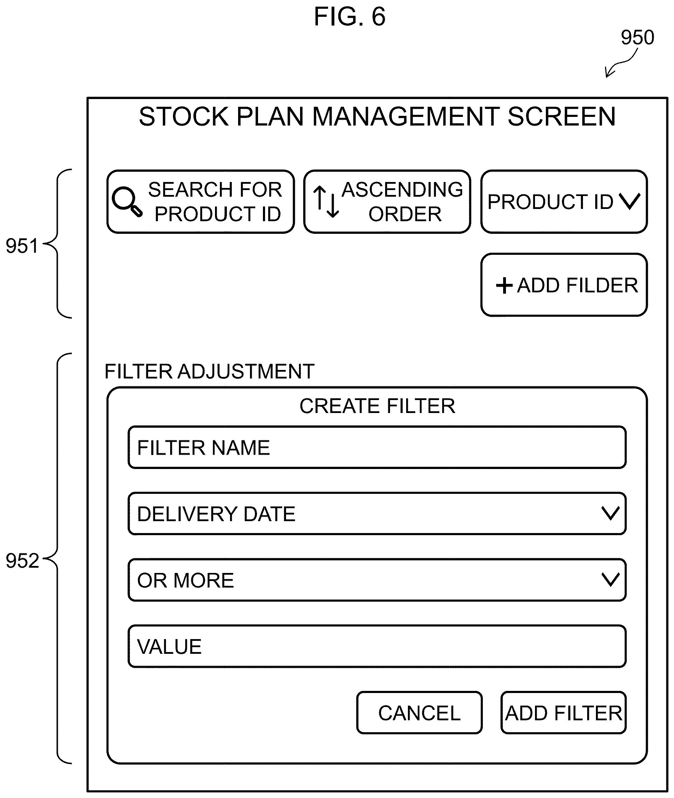

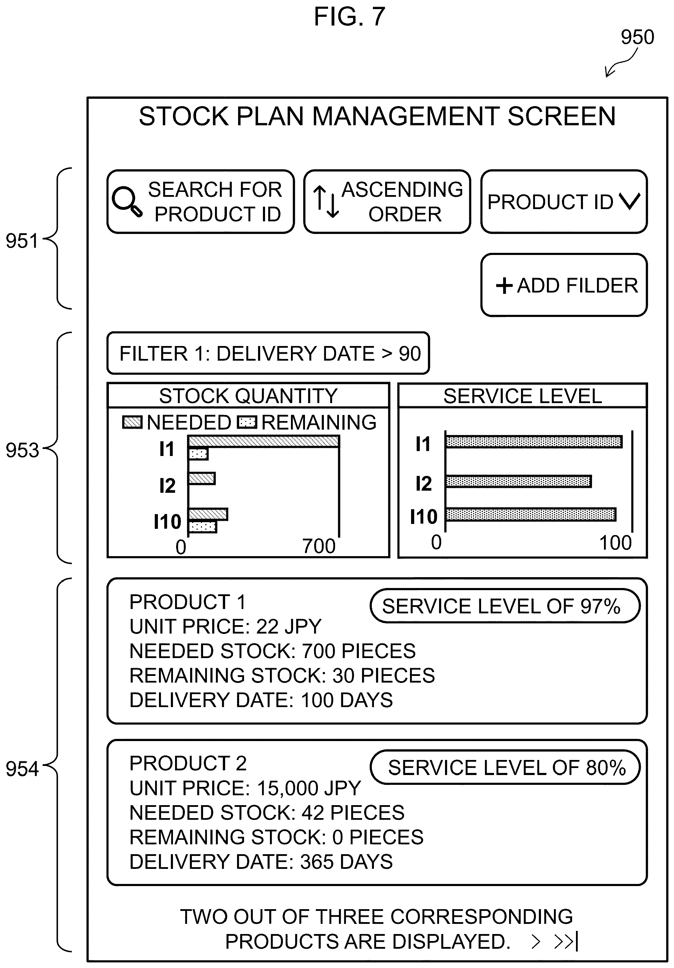

FIGS. 6 and 7 are diagrams illustrating a management screen 950 that the user refers to. The number of products assumed in the present embodiment is huge, and it is difficult for the user to grasp the products if they are displayed as they are. Therefore, the management screen 950 provides an interface for narrowing down the products first. The management screen 950 includes an upper area 951 and a filter setting area 952.

The upper area 951 includes a search field for searching by a product ID, a rearranging condition for rearranging the products after filtering, and a filter for displaying only products meeting a corresponding condition. The user can display only the corresponding products by inputting a product ID to the search field. Also, the user can rearrange the products after the searching as targets in an ascending order or a descending order based on an arbitrary item, for example, product IDs, prices, or delivery dates. The filter setting area 952 includes a filter name input field, an item selection field, a condition input field, and a value input field. The user can input an arbitrary filter name to the filter name input field. The user can select an item in regard to which conditions are to be narrowed down, for example, either a delivery date or a price in the item selection field. The user can select "or more" or "less" in the condition input field. The user can input an arbitrary value to the value input section. If the user input values to these input fields and presses an "add filter" button shown below the filter setting area 952, then the screen moves on to the next screen.

FIG. 7 is a diagram illustrating the management screen 950 after a filter is added. The drawing illustrates an exemplary case where a filter for selecting products with delivery dates of greater than 90 days has been set. The management screen 950 includes the upper area 951, a graph display area 953, and a product display area 954. Display of the upper area 951 is similar to that in FIG. 6. In the graph display area 953, data regarding each product after the filter is applied is displayed in graphs. Although stock quantities and service levels are shown by bar graphs in this example, other items may be displayed, or display may be performed in a way other than the bar graphs. In the product display area 954, a list of products corresponding to the set filter is displayed. However, the product display area 954 is limited, and in a case where it is not possible to display all the corresponding products at once, the fact indicating that there are other products and an interface for displaying the other products are additionally displayed as shown at the lowermost part of the drawing.

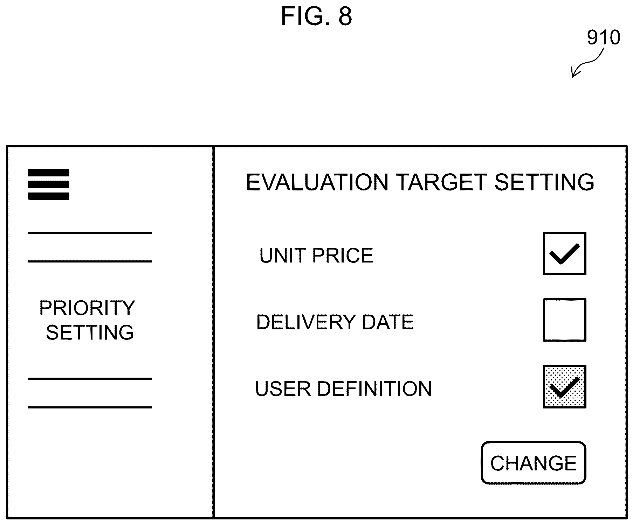

FIG. 8 is a diagram illustrating an evaluation target selection window 901 displayed on the input/output device 45 in Step S311. In the evaluation target selection window 901, check boxes for selecting a unit price, a delivery date, and a user definition, which are evaluation target candidates, are shown. However, the check box for the user definition is checked and grayed out, and the user definition is always used. The check boxes for the unit price and the delivery date can be changed by the user, and in the state of this drawing, the unit price is selected while the delivery date is not selected. Once the user selects the "change" button shown at the bottom of the drawing, the user's selection is transmitted to the user interaction module 11.

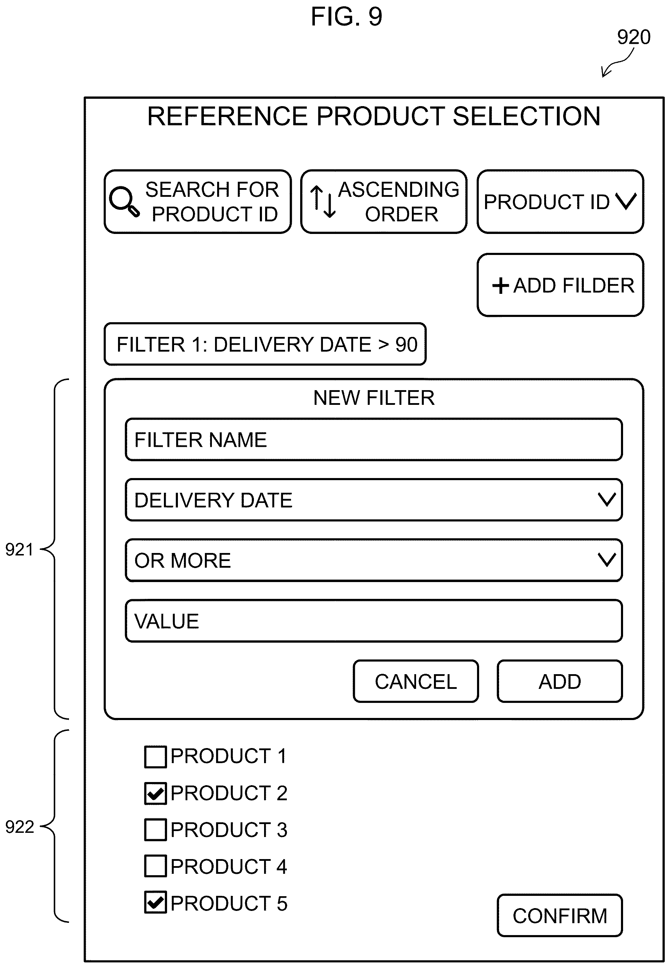

FIG. 9 is a diagram illustrating a reference product selection window 920 displayed on the input/output device 45 in Step S312. The reference product selection window 920 includes a filter area 921 and a product area 922. The filter area 921 includes a search field for searching based on a product ID, a rearranging condition for rearranging products after filtering, and a filter for displaying only products corresponding to the corresponding condition. The user can directly specify a product by inputting a product ID. Also, the user can rearrange products displayed in the product area 922 in an ascending order or a descending order based on an arbitrary item, for example, product IDs, prices, or delivery dates. The filter is used to narrow down products from a large number of products, and for example, it is possible to display only products with delivery dates of equal to or greater than 10 days, only products with prices of less than a predetermined value, or the like in the product area 922. A plurality of filters may be combined, and it is possible to combine AND conditions or OR conditions in response to user's designation.

The product area 922 includes a product list of products after being filtered and rearranged based on the rearranging condition and check boxes to which the user inputs whether to employ the products. Once the user checks one or more check boxes and presses the "confirm" button at the bottom, then the checked products are transmitted as reference products to the user interaction module 11. In other words, a "product 2" and a "product 5" are transmitted as reference products to the user interaction module 11 in the example of the drawing.

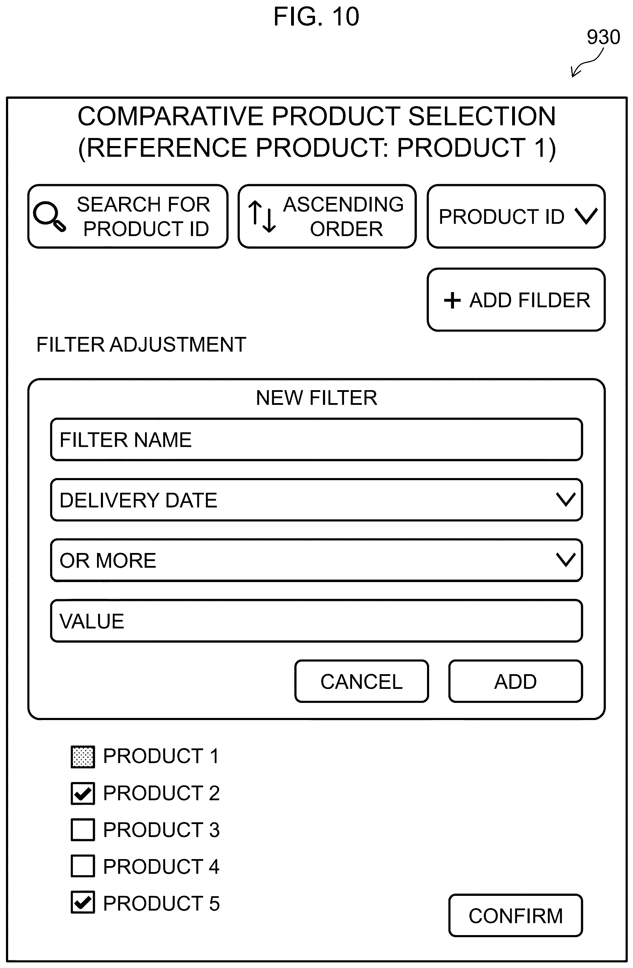

FIG. 10 is a diagram illustrating a comparative product selection window 930 displayed on the input/output device 45 in Step S313. This drawing illustrates an exemplary case where a "product 1" is selected in FIG. 9, and the window is for selecting products to be compared with the "product 1". Therefore, the check box for the "product 1", which is the reference product, is grayed out such that the "product 1" cannot be selected. The comparative product selection window 930 includes a filter similarly to the reference product selection window 920, and the user can efficiently select comparative products from a huge number of products by using a filter.

Once the user checks one or more check boxes and presses the "confirm" button at the bottom, then the checked products are transmitted as comparative products to the user interaction module 11. In other words, the "product 2" and the "product 5" are transmitted as the comparative products to the user interaction module 11 in the example of the drawing. In a case where the user selects two products in the reference product selection windows 920, for example, the comparative product selection window 930 is displayed twice to individually select comparative products for each of the reference products.

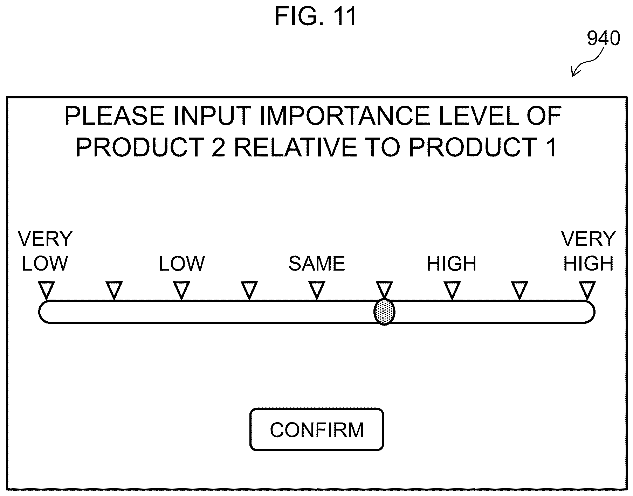

FIG. 11 is a diagram illustrating a relative evaluation value input window 940 displayed on the input/output device 45 in Step S314. The drawing illustrates an exemplary case where the "product 1" is selected in FIG. 9 and the "product 2" is selected in FIG. 10, and an input of an importance level of the "product 2" with respect to the "product 1" is received. In the example of the drawing, the user adjusts the position of a slider arranged in the left-right direction. "Same" illustrated at the center indicates that the importance levels of the "product 1" and the "product 2" are the same, and the drawing indicates that the "product 2" is more important on the side closer to the right while the "product 1" is more important on the side closer to the left. Once the user selects the "confirm" button illustrated at the bottom of the drawing, then the user's selection is transmitted to the user interaction module 11. In a case where the user selects two products in the reference product selection window 920 and selects two products and three products in the comparative product selection window 930 displayed twice, for example, the relative evaluation value input window 940 is displayed five times.

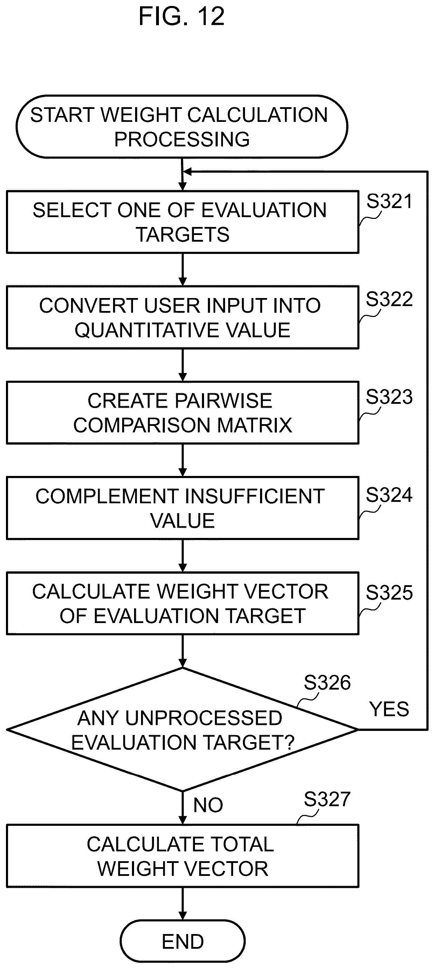

FIG. 12 is a flowchart illustrating details of the weight calculation processing executed by the weight determination module 12. This processing corresponds to Step S320 in FIG. 4. Before this flowchart is executed, the input reception processing illustrated in FIG. 5 is completed. Most of the steps described below is executed by the input integration sub-module 15, and only Step S327 is executed by the total weight calculation sub-module 16.

First, in Step S321, the input integration sub-module 15 selects one of evaluation targets selected by the user in the input reception processing, which is one of evaluation targets that have not been selected. The evaluation target selected in this step will be referred to as a "selected evaluation target" below. In subsequent Step S322, the input integration sub-module 15 converts a user input value into a quantitative value for the selected evaluation target. However, in a case where the selected evaluation value is other than the user input 5, the processing in this step is not needed. This is because a price or a delivery date, for example, is acquired in advance as numerical data. The input integration sub-module 15 can allow the user to convert relative evaluation into a quantitative value by using a Saaty scale or the like. For example, "1" is obtained in a case where "same" is selected in FIG. 11, "5" is obtained in a case where "high" is selected, or "0.1" is obtained in a case where "very low" is selected.

In subsequent Step S323, the input integration sub-module 15 creates a pairwise comparison matrix (PCM) for the selected evaluation target using the processing result in Step S322. The pairwise comparison matrix is a unit diagonal matrix in which one side has the same number of elements as that of products and all diagonal elements are 1. In the present embodiment, the pairwise comparison matrix of the user input 5 is represented as PCM_{User}, the pairwise comparison matrix of the price is represented as PCM_{Price}, and the pairwise comparison matrix of the delivery date is represented as PCM_{Leadtime}.

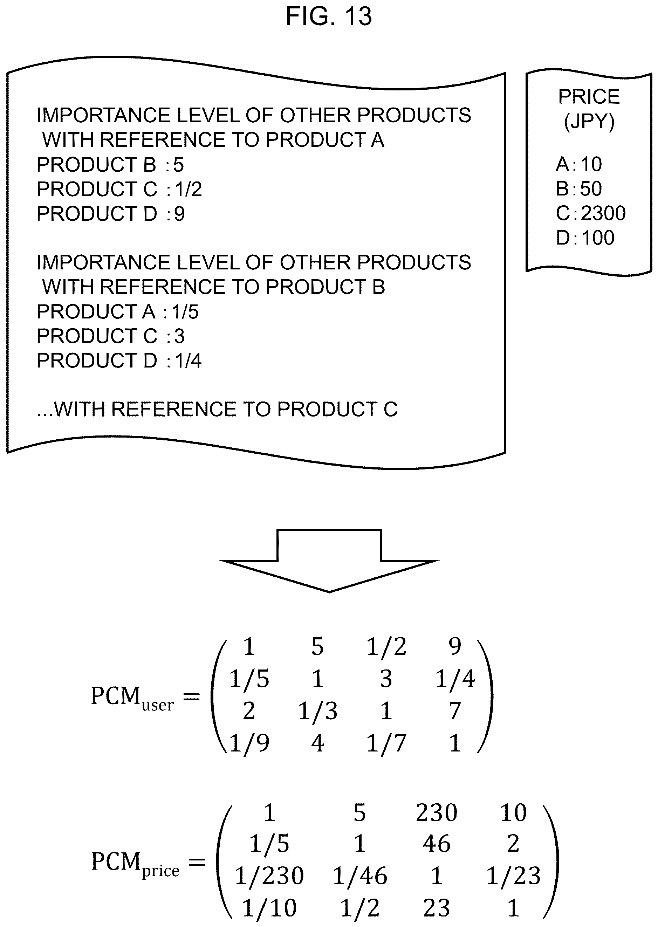

FIG. 13 is a diagram illustrating an example of a relative evaluation values and pairwise comparison matrixes. The drawing illustrates an example of two evaluation targets, namely the user input 5 and the price, in a case where the number of products is four. As product names, names of Product A to Product D are used for convenience. The quantitative values illustrated at the top of the drawing are obtained through the processing in Step S322. In Step S323, the matrixes illustrated at the bottom of the drawing are generated. In each of the pairwise comparison matrixes, data related to Product A is stored in the first row and in the first column, data related to Product B is stored in the second row and in the second column, data related to Product C is stored in the third row and in the third column, and data related to Product D is stored in the fourth row and in the fourth column. The number of dimensions of the pairwise comparison matrix is the same as the number of products, and the number of dimensions of the pairwise comparison matrix is the same for a different evaluation target. Returning to Fig. 12, the description will be continued.

In subsequent Step S324, the input integration sub-module 15 complements an insufficient value in the pairwise comparison matrix. The input integration sub-module 15 can use various known methods and can use, for example, a λmax-based optimal completion method, a c3-based optimal completion method, or a connection path method.

In subsequent Step S325, the input integration sub-module 15 calculates a weight vector w by an analytic hierarchy process using PCM that has already been calculated. The weight vector w is a one-dimensional vector having the same number of elements as that of the products. In a case where the number of products is four as illustrated in FIG. 13, for example, the number of elements of the weight vector w is four. In a case where the evaluation target is the user input 5, the input integration sub-module 15 calculates a user evaluation weight vector w_{User} using PCM_{User}, which is the pairwise comparison matrix of the user input 5. In the case where the number of products is four, the user evaluation weight vector w_{User} has four elements as described above, and for example, the first element indicates a weight based on the user input 5 for Product A, and the second element indicates a weight based on the user input 5 for Product B.

Similarly, the input integration sub-module 15 calculates a price weight vector w_{Price} in a case where the evaluation target is a price, and the input integration sub-module 15 calculates a delivery date weight vector w_{Leadtime} in a case where the evaluation target is a delivery date. The input integration sub-module 15 can calculate the weight vector from PCM using various known methods. For example, the input integration sub-module 15 may employ any of a right eigenvalue method, a left eigenvalue method, a geometric mean method, and a normalization mean method.

In subsequent Step S326, the input integration sub-module 15 determines whether or not there is any unprocessed evaluation target. The input integration sub-module 15 returns to Step S321 in a case where it is determined that there is an unprocessed evaluation target, or moves on to Step S327 in a case where it is determined that there is no unprocessed evaluation target. In a case where the user selects three items, namely the user input 5, the price, and the delivery date, for example, the processing proceeds to Step S327 if three matrixes, namely PCM_{User}, PCM_{Price}, and PCM_{Leadtime} have been calculated.

In Step S327, the total weight calculation sub-module 16 calculates the total weight vector W using each PCM that has already been calculated using each weight vector calculated in Step S325 and ends the processing illustrated in FIG. 12. The total weight vector W is a one-dimensional vector that has the same number of elements as the number of products similarly to the weight vector w. The total weight vector W is calculated using each weight vector and an item weight K set in advance for each evaluation item. In the case where the evaluation values selected by the user are three evaluation values, namely the user input 5, the price, and the delivery date, for example, the following calculation is performed. $\begin{matrix}W = {K}_{User} ⋅ {w}_{User} + {K}_{Price} ⋅ {w}_{Price} + \\ {K}_{Leadtime} ⋅ {w}_{Leadtime}\end{matrix}$

In Equation 1, K_{User} denotes an item weight of the user input 5, K_{Price} denotes an item weight of the price, and K_{Leadtime} denotes an item weigh of the delivery date. These item weights are scalar values. Although it is possible to set an arbitrary value as each item weight, setting the item weights such that the sum thereof becomes one has an advantage of easiness of making comparison regardless of the number of evaluation values.

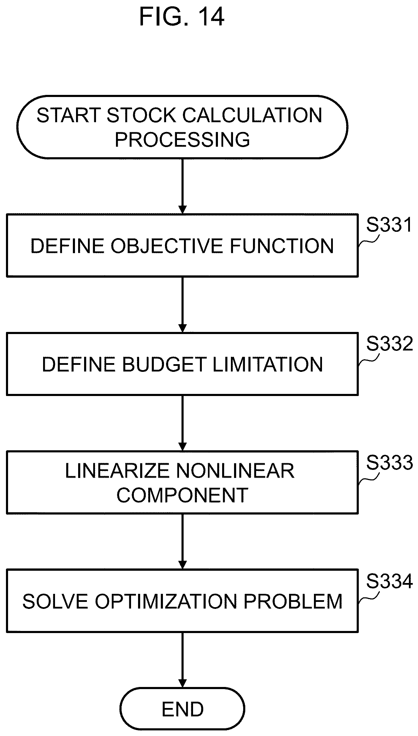

FIG. 14 is a flowchart illustrating details of stock calculation processing executed by the optimization module 13. The processing corresponds to Step S330 in FIG. 4. First, in Step S331, the optimization module 13 defines an objective function. An objective function obj is a total of a priority weight for each product item and a service level and is defined as Equation 2 below. $Obj = {w}_{1} ⋅ {SL}_{1} + {w}_{2} ⋅ {SL}_{2} + … + {w}_{N} ⋅ {SL}_{N}$

In Equation 2, w denotes an element of the total weight vector W, SL denotes a service level, and the subscript number denotes a product number. More specifically, w₁ denotes the first element in the total weight vector W, and SL₁ denotes the service level of the first product. If this is made to correspond to the example illustrated in FIG. 13, N in Equation 2 is "4". Since the total weight vector W has already been calculated through the above-described weight calculation processing, w₁, w₂, and the like have also already been calculated. The service level is a probability at which stockout does not occur before the next restocking cycle. In a case where the service level of Product A is 95%, for example, the probability at which stockout occurs before the next restocking cycle is 5%. A relationship between Q and SL depends on an externally given function f. In other words, the relationship of Equation 3 below is satisfied.${SL}_{i} = {f}_{i} \left({Q}_{i}\right)$

In subsequent Step S332, the optimization module 13 defines a budget limitation. A total budget price B is a value given in advance and is represented as Equation 4 below.${P}_{1} ⋅ {Q}_{1} + {P}_{2} ⋅ {Q}_{2} + … + {P}_{N} ⋅ {Q}_{N} \leq B$

In Equation 4, P denotes the price of the product, Q denotes the stock quantity of the product, and the subscript number denotes the product number. More specifically, P₁ denotes the price of the first product, and Q₁ denotes the stock quantity of the first product. If this is made to correspond to the example illustrated in FIG. 13, N in Equation 4 is "4". In subsequent Step S333, the optimization module 13 linearizes a nonlinear component in the function f. It is possible to use various known methods for the linearization, and a nonlinear function is approximated by a piecewise linear function, for example.

In subsequent Step S334, the optimization module 13 solves the optimization problem defined in Steps S331 and S332. In other words, Q1 to QN that maximizes the objective function defined in Step S331 while satisfying the budget limitation defined in Step S332 are calculated, and the processing illustrated in FIG. 14 is ended. It is possible to use various known solvers for the calculation and to employ, for example, a mixed-integer linear programming (MILP) framework or a mixed-integer nonlinear programming (MINLP). In a case where the MINLP framework is used, in particular, the objective function may be nonlinear, and the processing in Step S333 can thus be omitted.

According to the above-described first embodiment, the following effects can be obtained.
(1) The stock optimization system 1 optimizes the stock level of products. The stock optimization system 1 includes: the weight determination module 12 configured to calculate the total weight W, which is a weight of quantitative priority orders of the products, based on at least the user input 5 that is evaluation of the products input by the user, from among the user input 5 and the data-driven reference 6 that is the reference obtained through data processing instead of the user input 5; the optimization module 13 configured to formulate the objective function based on the total weight W; and the user interaction module 11 that receives the user input 5. The stock optimization system 1 generates the objective function based on at least the user input 5 and can thus reflect user's determination to determination of the stock quantity. The user input 5 is expected to have higher information freshness than the data-driven reference 6, and it is thus possible to reflect facts and the like that have not yet been reflected to the data-driven reference 6 to the stock quantity by the user input 5. Also, the optimization is performed with the user input 5 reflected to the objective function, and an output of the stock optimization system 1 thus satisfies a limitation condition.
(2) The weight determination module 12 calculates the total weight based on both the user input 5 and the data-driven reference. The weight determination module 12 includes the input integration sub-module 15 that calculates the user evaluation weight vector w_{User}, which is an importance level of each product based on the user input 5, and the data-driven weight, which is an importance level of each product based on the data-driven reference, for example, the price weight vector w_{Price} and the delivery date weight vector w_{Leadtime}, and the total weight calculation sub-module 16 that calculates the total weight vector W, which is a weight from multiple perspectives, of each product by integrating the user evaluation weight vector w_{User} and the data-driven weight.
(3) A price is preset for each of the products. The optimization module 13 further calculates each number of the products such that the objective function is maximized under a condition that the sum of the number of products and the price does not exceed a predetermined threshold value.
(4) The input integration sub-module 15 calculates the user evaluation weight and the data-driven weight using the analytic hierarchy process.
(5) The user input 5 is a relative qualitative evaluation of the products, and the weight determination module 12 converts the user input 5 into quantitative evaluation using a scale of Saaty or the like.
(6) The user interaction module 11 provides a filter setting that enables a filter for narrowing down the products to be set and enables the target of the user input 5 to be selected from the products narrowed down by the filter as illustrated in FIG. 9.
(7) The user interaction module 11 presents the interface that enables the evaluation target based on the data-driven reference to be selected as illustrated in FIG. 8. The weight determination module 12 sets the data-driven reference for the evaluation target selected by the user.

### First Modification

In the above-described first embodiment, the pairwise comparison matrix and the weight of each evaluation item are calculated to calculate the total weight W. However, the total weight may be calculated in a simple manner as follows. In other words, a value obtained by simply adding up a value of each evaluation item may be employed as a value of a total weight of each product. In a case where the delivery date of a certain product is 100 days, a unit price thereof is 1000 JPY, and the user sets the priority order thereof to 70, for example, the total weight of the product is set to 100 + 1000 + 70. According to the first modification, it is possible to calculate the total weight W by a method that is different from that in the first embodiment.

### Second Modification

In the above-described first embodiment, the evaluation target is selected by the user as illustrated in FIG. 8. However, the stock optimization system 1 may use a preset evaluation target without receiving selection of the evaluation target from the user. Furthermore, the stock optimization system 1 may use only the user input 5 as an evaluation target without receiving selection of the evaluation target from the user. In this case, the data-driven reference 6 is not taken into consideration for the calculation of the total weight W, and the total weight W is calculated based on only the user input 5.

(8) The weight determination module 12 regards, as the total weight W, the user evaluation weight that is an importance level of each product based on the user input 5.

### Third Modification

In the above-described first embodiment, no special time limitation is provided for an input from the user, and the input user input 5 is always valid. However, a time limitation during which the user input 5 is reflected may be set in advance, or the user may be able to set the time limitation. The time limitation may be an execution time limit that is a time limit until which the stock optimization system 1 executes computation or may be a target timing limit that is a time limit of the target calculated by the stock optimization system 1.

An example of the execution time limit is as follows. For example, the user input 5 is used in a case where the stock optimization system 1 performs computation within 24 hours after the user input 5 is input, and the user input 5 is not used for computation after 24 hours elapses. However, the computation target period is not limited in this case, and the computation may be used to calculate the optimal stock after one year as long as the computation is executed within 24 hours. An example of the target timing limit is as follows. For example, the user input 5 is used to calculate the optimal stock for a target period within four weeks after the input from the user, and the user input 5 is not used to calculate the optimal stock of five or more weeks later. However, in this case, the timing at which the stock optimization system 1 executes computation does not matter.

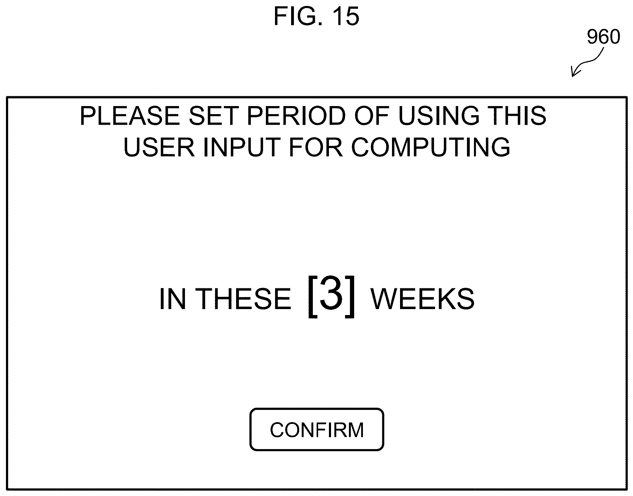

FIG. 15 is a diagram illustrating a validity date input window 960 in the present modification. In this example, the execution time limit is set, and the user can input only the number part indicating the limit. Once the user inputs a number and presses the "confirm" button at the bottom, then the input number is transmitted to the user interaction module 11.

According to the third modification, the following effect can be obtained in addition to the effects of the first embodiment.

(9) The user interaction module 11 receives an input of a validity period which is a period during which the user input 5 is valid. The optimization module 13 further calculates each number of products such that the objective function is maximized for the validity period as a target under a condition that a sum of the number of products and the price does not exceed a predetermined threshold value.

### Fourth Modification

In the above-described first embodiment, the stock optimization system 1 includes the input/output device 45 and performs interaction directly with the user. However, the stock optimization system 1 may not include the input/output device 45 and may perform interaction indirectly with the user via the communication device 46.

### Fifth Modification

In the above-described first embodiment, the computation timing of the stock optimization system 1 is not particularly specified. However, the stock optimization system 1 may execute computation again as long as there is an input from the user if computation is performed immediately before.

According to the present modification, the following effect is obtained in addition to the effects of the first embodiment.

(10) The weight determination module 12 and the optimization module 13 perform recalculation based on a user input. Therefore, the stock optimization system 1 can calculate an optimal stock again based on the latest user input 5 if the user provides an input again.

### Second Embodiment

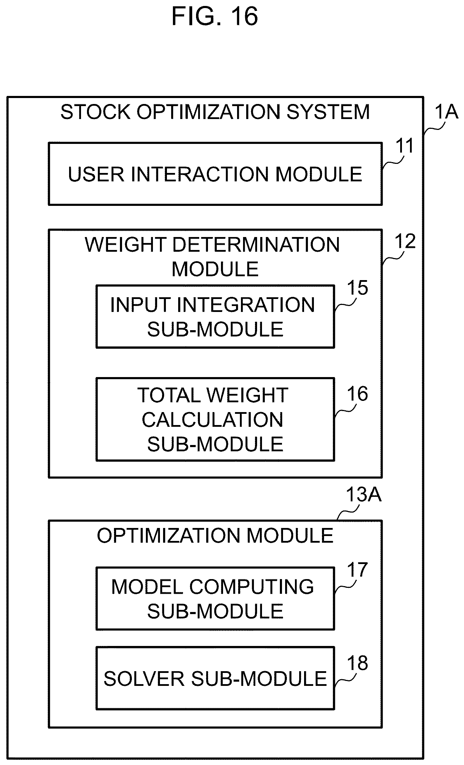

A second embodiment of a stock optimization system will be described with reference to FIGS. 16 to 18. In the following description, the same components as those in the first embodiment will be denoted by the same reference signs, and differences will be mainly described. Points that will not be particularly described are the same as those in the first embodiment. The present embodiment is different from the first embodiment mainly in that some optimization model is selected from a plurality of optimization models for each product.

In the present embodiment, stock of products, namely a value corresponding to Qᵢ in the first embodiment is calculated using a plurality of optimization models. Also, the number of optimization models is M, and the number of products is N in the present embodiment. The optimal stock value of j-th products calculated by an i-th optimization model is represented as Qᵢⱼ.

FIG. 16 is a functional configuration diagram of a stock optimization system 1A according to the second embodiment. Processing of a user interaction module 11 and a weight determination module 12 is similar to that in the first embodiment. An optimization module 13A includes a model computing sub-module 17 and a solver sub-module 18. The model computing sub-module 17 calculates the optimal stock of each product using a plurality of models. The solver sub-module 18 solves an optimization problem, which will be described later.

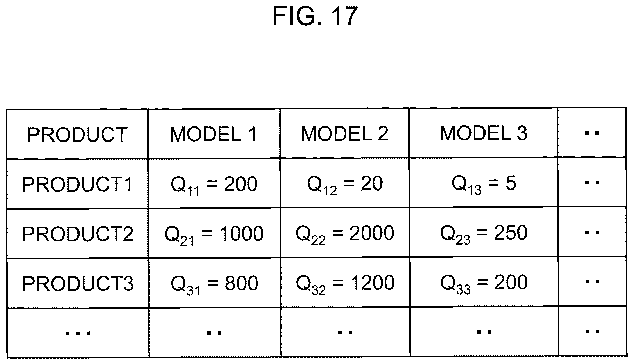

FIG. 17 is a diagram illustrating an example of optimal stock values calculated by each optimization model and calculated by the model computing sub-module 17. As illustrated in the drawing, the stock values differ depending on the optimization models. Since only one optimal stock value is employed for each product, it is necessary to select an optimization model to be employed for each product. The solver sub-module 18 selects an optimization model for each product such that an objective function is maximized. Also, a winning rate WR is used instead of a service level SL for the objective function in the present embodiment. The winning rate WR is a value calculated for each combination of a product and a model and is a value from 0 to 1 indicating a rate of a period during which shortage of the product has not occurred.

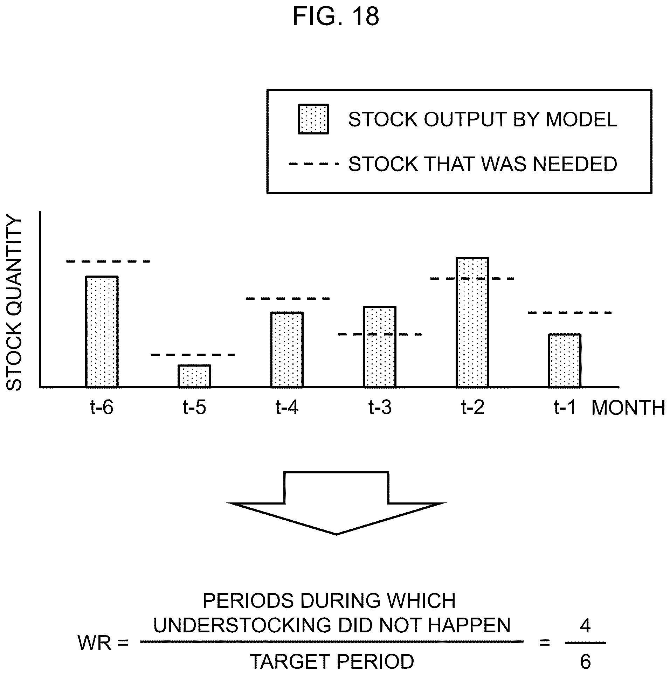

FIG. 18 is a diagram for explaining the winning rate WR. In the drawing, optimal stock of a certain product calculated by a certain optimization model is illustrated by a bar graph, and stock that was needed is illustrated by dashed lines. Since the period during which the stock was not short among the six-month period illustrated in the drawing is four months, the winning rate WR is 4/6.

In the present embodiment, z is a symbol indicating binary selection. zᵢⱼ = 1 indicates that a model j was selected for a product i, zᵢⱼ = 0 indicates that the model j was not selected for the product i. The objective function obj in the present embodiment is represented as Equation 5 below by using the winning rate WR and the binary selection z. 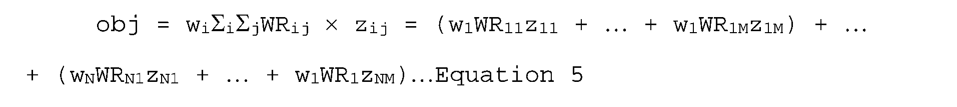 obj = wiΣiΣjWRij × zij = (w1WR11z11 + ... + w1WR1Mz1M) + ... + (wNWRN1zN1 + ... + w1WR1zNM)${\sum }_{i} {\sum }_{j} {z}_{ij} \times {Q}_{ij} \times {P}_{i} \leq B$${\sum }_{j} {z}_{ij} = 1 , ∀ i$

The limitation condition 1 is a budget limitation and indicates that the total stock budget of all the products does not exceed a budget B. The limitation condition 2 is a model selection limitation and indicates that only one model is selected for each product. The solver sub-module 18 determines a model for each product such that the objective function obj is maximized while these limitation conditions are satisfied.

According to the above-described second embodiment, the following effect is obtained.

(11) A price is preset for each product. The optimization module 13 further calculates a plurality of stock quantities using a plurality of models for each of the products and determines a stock quantity for each of the products by determining which of the models is to be employed for each of the products such that the objective function is maximized under a condition that a sum of the number of the products and the price does not exceed a predetermined threshold value.

In each of the above-described embodiments and modifications, the configuration of the functional block is only an example. Some functional configurations illustrated as separated functional blocks may be integrally configured, or a configuration illustrated by a single functional block diagram may be divided into two or more functions. Also, a configuration in which some of functions included in each functional block is included in another functional block may also be adopted.

Although the program is stored in the ROM 73 in each of the above-described embodiments and modifications, the program may be stored in the fixed disk 44. Also, the stock optimization system 1 may include an input/output interface, which is not illustrated, and the program may be read from another device via a medium that can be used by the input/output interface and the stock optimization system 1 as needed. Here, the medium indicates, for example, a storage medium that can be attached to and detached from the input/output interface, a communication medium, that is, a wired, wireless, or optical network, or a carrier wave or a digital signal propagating through the network. Also, some or all of functions implemented by the program may be implemented by a hardware circuit or an FPGA.

Each of the above-described embodiments and modifications may be combined. Although various embodiments and modifications have been described above, the present invention is not limited to the content thereof. Other aspects that are conceivable within the scope of the technical idea of the present invention are also included in the scope of the present invention.

### Reference Signs List

1, 1A stock optimization system
5 user input
11 user interaction module
12 weight determination module
13, 13A optimization module
15 input integration sub-module
16 total weight calculation sub-module
17 model computing sub-module
18 solver sub-module

## Claims

1. A stock optimization system that optimizes stock levels of products comprising:
a weight determination module configured to calculate a total weight, which is a weight of quantitative priority orders of the products, based on at least a user input that is evaluation of the products input by a user, from among the user input and a data-driven reference which is a reference obtained through data processing instead of the user input;
an optimization module configured to formulate an objective function based on the total weight; and
a user interaction module that receives the user input.

2. The stock optimization system according to claim 1,
wherein the weight determination module calculates the total weight based on both the user input and the data-driven reference, and
the weight determination module includes
an input integration sub-module that calculates a user evaluation weight, which is an importance level of each of the products based on the user input, and a data-driven weight, which is an importance level of each of the products based on the data-driven reference, and
a total weight calculation sub-module that calculates the total weight, which is a weight from multiple perspectives, of each of the products by integrating the user evaluation weight and the data-driven weight.

3. The stock optimization system according to claim 1,
wherein a price is preset for each of the products, and
the optimization module further calculates each number of the products such that the objective function is maximized under a condition that a sum of the number of the products and the price does not exceed a predetermined threshold value.

4. The stock optimization system according to claim 1,
wherein a price is preset for each of the products, and
the optimization module further calculates a plurality of stock quantities using a plurality of models for each of the products and determines a stock quantity for each of the products by determining which of the models is to be employed for each of the products such that the objective function is maximized under a condition that a sum of the number of the products and the price does not exceed a predetermined threshold value.

5. The stock optimization system according to claim 1,
wherein the weight determination module and the optimization module perform recalculation based on the user input.

6. The stock optimization system according to claim 2,
wherein the input integration sub-module calculates the user evaluation weight and the data-driven weight using an analytic hierarchy process.

7. The stock optimization system according to claim 1,
wherein the user input is relative qualitative evaluation of the products, and
the weight determination module converts the user input into quantitative evaluation.

8. The stock optimization system according to claim 1,
wherein the user interaction module
provides a filter setting that enables a filter for narrowing down the products to be set, and
enables a target of the user input to be selected from the products narrowed down by the filter.

9. The stock optimization system according to claim 1,
wherein the user interaction module
presents an interface that enables an evaluation target based on the data-driven reference to be selected, and
the weight determination module sets the data-driven reference for the evaluation target selected by the user.

10. The stock optimization system according to claim 1,
wherein the user interaction module further receives an input of a validity period that is a period during which the user input is valid,
a price is preset for each of the products, and
the optimization module further calculates each number of the products such that the objective function is maximized for the validity period as a target under a condition that a sum of the number of the products and the price does not exceed a predetermined threshold value.

11. The stock optimization system according to claim 1,
wherein the weight determination module regards, as the total weight, a user evaluation weight that is an importance level of each of the products based on the user input.

12. A stock optimization method that is executed by a computer, the method comprising:
a reception step of receiving, from a user, a user input that is evaluation of products;
a weight determination step of calculating a total weight, which is a weight of quantitative priority orders of the products, based on at least the user input, from among the user input and a data-driven reference which is a reference obtained through data processing instead of the user input;
a formulation step of formulating an objective function based on the total weight; and
a solution step of solving an optimization model that maximizes the objective function while complying with a limitation.

13. The stock optimization method according to claim 12,
wherein the user input reflects a latest situation as compared with the data-driven reference.

14. The stock optimization method according to claim 12,
wherein the weight determination step includes
an input integration sub-step of calculating a user evaluation weight, which is an importance level of each of the products based on the user input, and a data-driven weight, which is an importance level of each of the products based on the data-driven reference, and
a total weight calculation sub-step of calculating the total weight, which is a weight from multiple perspectives, of each of the products by integrating the user evaluation weight and the data-driven weight.

15. The stock optimization method according to claim 12,
wherein the user input is relative qualitative evaluation of the products, and
in the weight determination step, the user input is converted into quantitative evaluation.
